# EUROPÄISCHE PATENTSCHRIFT

(11) **EP 0 703 928 B1**
(45) Veröffentlichungstag und Bekanntmachung des Hinweises auf die Patenterteilung: **02.05.1997**
(21) Anmeldenummer: 94918835.3
(22) Anmeldetag: 03.06.1994
(51) Int. Cl.: C08C 19/30, C08C 19/44, C08F 36/04, C08F 4/48

(54) **TELECHELE MIT ETHANOL-AMIN- BZW. OLIGOETHER-OL-AMIN-ENDGRUPPEN UND VERFAHREN ZUR HERSTELLUNG**
TELECHELIC POLYMERS WITH ETHANOLAMINE OR OLIGOETHER-OL-AMINE TERMINAL GROUPS AND A METHOD OF PREPARING SUCH COMPOUNDS
POLYMERES TELECHELIQUES A GROUPES TERMINAUX ETHANOL-AMINE OU OLIGOETHER-OL-AMINE ET LEUR PROCEDE DE PREPARATION

(30) Priorität: 16.06.1993 DE 4319954
(43) Veröffentlichungstag der Anmeldung: 03.04.1996
(73) Patentinhaber: BASF Aktiengesellschaft, 67063 Ludwigshafen (DE)
(72) Erfinder: BRONSTERT, Klaus, D-67316 Carlsberg (DE); KNOLL, Konrad, D-68161 Mannheim (DE)
(86) Internationale Anmeldenummer: EP9401802
(87) Internationale Veröffentlichungsnummer: WO9429354

(56) Entgegenhaltungen:
- EP-A- 0 477 679
- GB-A- 1 539 905
- US-A- 3 055 952
- CHEMICAL ABSTRACTS, vol. 116, no. 12, 23. März 1992, Columbus, Ohio, US; abstract no. 107226, E.G.ATOVMYAN ET AL. 'Intermolecular interreactions in oligobutadienes with secondary amine end groups'

## Beschreibung

Telechele sind Polymere, deren Kettenenden funktionelle Gruppen, z.B. -OH, -SH, -NH₂ usw. enthalten. Sie können als Bausteine von Reaktionspolymeren wie Polyurethanen, Polyepoxiden, Polyestern usw. dienen, wobei insbesondere an beiden Kettenenden funktionalisierte Polymere Bedeutung haben.

Für die Synthese von Dientelechelen ist das Verfahren der anionischen Polymerisation von z.B. Butadien oder Isopren mit insbesondere bifunktionellen Dilithiuminitiatoren in Kohlenwasserstoffen besonders geeignet. Es liefert lebende Polymere enger Molmassenverteilung und geeigneter Mikrostruktur, da hohe Anteile der Diene in 1,4-Konfiguration eingebaut werden. Auch sind geeignete Initiatoren bekannt (z.B. EP 305909 (1988), EP 363659 (1989) oder EP 405327 (1990)). Durch polymeranaloge Umsetzung mit geeigneten Funktionalisierungsreagentien werden die bifunktionell gewachsenen lebenden Polymeren dann in die Telechele umgewandelt.

Besonders begehrte Telechele sind solche mit endständigen primären oder sekundären Hydroxylgruppen, die nach einem bevorzugten Verfahren (vgl. z.B. US 3786116) durch Umsetzung der lebenden Polymeren mit Epoxiden, z.B. Ethylenoxid oder Propylenoxid, hergestellt werden.

Dabei bilden sich durch die Umwandlung der (weniger polaren) Li-organischen Endgruppen in stark polare Li-Alkoholat-Endgruppen sehr stabile Assoziate der Kettenenden, was zu einem drastischen Viskositätsanstieg bzw. bei Funktionalisierungen, die zu mehr als 40-50 % zu bifunktionellen Spezies führen, zum Gelieren der Reaktionsmasse infolge physikalischer Vernetzung führt. Wegen der hohen Reaktionsgeschwindigkeit setzt die Gelierung fast unmittelbar nach Zugabe der Terminierungsreagens ein, dessen gleichmäßige Einmischung dadurch verhindert wird. Die Folgen sind unvollständige Umsetzung und Qualitätseinbußen der Telechele, evtl. auch Rührerblockade oder gar Beschädigungen an den Anlagenteilen. Zwar kann man die Terminierung bei niedrigen Konzentrationen realisieren; eine solche Arbeitsweise ist jedoch unökonomisch. Es bestand daher Bedarf an einem Verfahren, das eine Terminierung unter Bildung von Hydroxylendgruppen ohne diese Behinderungen ermöglicht.

Dies gelingt erfindungsgemäß dadurch, daß ein lebendes, an mindestens einem Kettenende lithiumorganisch substituiertes Polydien zunächst mit einem entsprechenden Aldimin der allgemeinen Formel II

R¹-CH=N-Ar (II)

und dann, gegebenenfalls nach Hydrolyse und Isolierung eines Zwischenprodukts, mit einem Epoxid der allgemeinen Formel III 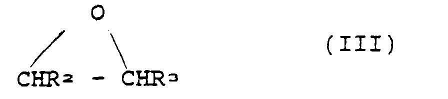 wobei R¹, R² und R³ und Ar die nachstehende Bedeutung haben, umgesetzt wird.

Unmittelbarer Erfindungsgegenstand ist ein durch anionische Polymerisation eines Diens mit bifunktionellem Li-Initiator und anschließende polymeranaloge Umsetzung erhältliches Polydien oder Copolydien, das mindestens eine Ethanolamin- bzw. Oligoether-ol-amin-Endgruppe der allgemeinen Struktur I 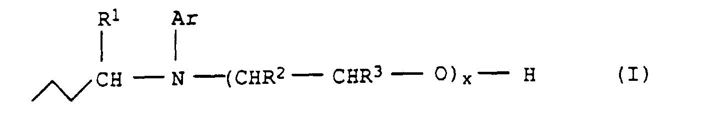 enthält, in der
R¹: → Alkyl oder Aryl;
Ar: → Aryl;
R²: → Alkyl oder Wasserstoff und
R³: → Aryl, Alkyl oder Wasserstoff bedeutet
und x den Wert 1 bis 10 annehmen kann, sowie deren Hydrierungsprodukte.

In der ersten Umsetzungsstufe, die an sich bekannt ist (R. Koenig, G. Riess, A. Banderet, Europ. Polym. J. 3, 723 (1967)), werden dabei vorzugsweise Aldimine von aromatischen Aminen, z.B. von Anilin eingesetzt. Besonders bevorzugt sind Aldimine aus einem aromatischen Amin und einem aromatischen Aldehyd, z.B. Benzalanilin.

Die in der ersten Umsetzungsstufe entstehenden Telechele mit sekundären aromatischen Aminogruppen am Kettenende sind als solche wegen ihrer geringen Reaktionsfähigkeit technisch von geringem Interesse.

So wird z.B. nach der üblichen Standardmethode (Umsetzung mit Phthalsäureanhydrid, Verseifung) keine Aminzahl gemessen, andererseits beobachtet man aber auch nicht Assoziation, verbunden mit einem Gelieren des Reaktionsgemisches.

Die Anlagerung verläuft langsamer als die direkte Umsetzung des Dilithiumpolymeren mit Epoxid, so daß genügend Zeit für eine homogene Durchmischung der Reaktionspartner zur Verfügung steht. Da Gelierung nur bei sehr hoher Funktionalisierungsausbeute auftritt und dann mit starker Verzögerung, ist die Reaktion verfahrenstechnisch leichter zu beherrschen.

Einheitlicher und ohne jedes Gelieren verläuft die Umsetzung des isolierten, alkalifreien, sekundäre aromatische Aminogruppen aufweisenden Polymeren mit Ethylenoxid (EO) in homogener Phase in Gegenwart von Wasser als Katalysator, gegebenenfalls auch etwas Säure, in einem alle Reaktionspartner lösenden Mittel, z.B. THF. In diesem ist die Umsetzung z.B. bei 120°C nach 4 Stunden vollständig, wobei 1 Mol EO an jedes Kettenende angelagert wird. Da diese Arbeitsweise jedoch einen zusätzlichen Verfahrensschritt benötigt, ist sie weniger bevorzugt.

Die erfindungsgemäße Telechele können Copolymerisate sein, d.h. außer Dienen auch Styrol oder α-Methylstyrol einpolymerisiert enthalten, zweckmäßig nicht mehr als etwa 50 mol-%. Die erfindungsgemäßen Telechele können ferner hydriert werden. Die Hydrierung mit molekularem Wasserstoff und geeigneten Hydrierkatalysatoren ist, z.B. in der US-A-3 113 986, der DE-A-1 222 266, DE-A-2 013 263, DE-A-1 106 961 oder DE-A-1 595 345 beschrieben.

Erfindungsgemäß hergestellte, an beiden Kettenenden mit Hydroxyl-Gruppen funktionalisierte Polymere sind u.a. als Präpolymere für Polyurethane, Epoxidharze oder für deren Modifizierung von besonderem Interesse. Im Vergleich zu Telechelen, die nur OH-Gruppen und keine Amingruppen enthalten, zeigen sie eine erhöhte Reaktivität.

Die Herstellung z.B. von Epoxidharzen oder von elastomeren Polyurethanen aus einem "Hartsegment" aus aromatischen Polyisocyanaten und einem "Weichsegment" aus funktionalierten flexiblen Makromolekülen wird z.B. bei H.P. Elias, Makromoleküle, Seiten 778 bis 780 und 809 bis 812, Aufl. Heidelberg-New York (1981) und der dort zitierten Literatur beschrieben.

Die erfindungsgemäß funktionalisierten Polymeren können z.B. mit Diisocyanaten und anderen Reagentien sehr leicht vernetzt werden. Lösungen solcher Polybutadiene, versetzt mit Diisocyanaten, ausgegossen auf silikoniertes Papier und getrocknet, ergeben bei überwiegend aus Dienen aufgebauten Polymere elastische, trockene, in Kohlenwasserstoffen unlösliche Filme, die sich von der Unterlage abziehen lassen und hohe reversible Dehnbarkeit aufweisen.

Polybutadiendiole zeichnen sich als "Weichsegmente" in thermoplastischen Polyurethanen durch besonders gute Entmischung von "Hart"- und "Weichsegmenten" aus, was aus anwendungs- und verarbeitungstechnischen Gründen erwünscht ist, wie dies auch von Becker und Braun, Kunststoffhandbuch, München-Wien, beschrieben wird.

Bei gleicher Molmasse aus dem Gewichtsmittel (M_{w}) weisen die erfindungsgemäß hergestellten telechelen Diole wegen ihrer engen Molmassenverteilung eine niedrigere Viskosität auf als bekannte Präpolymere, wie z.B. radikalisch hergestellte Polybutadientelechele, Polytetrahydrofuran oder Polyester. Sie sind daher besser verarbeitbar.

Die nach dem erfindungsgemäßen Verfahren erhaltenen Telechele können eine Durchschnittsmolmasse (Gewichtsmittel M_{w}) z.B. zwischen 1000 und 500.000, vorzugsweise 2.000 und 10.000 aufweisen, ermittelt durch Gelpermeationschromatographie (GPC) und Vergleich mit standardisierten, zur Eichung geeigneten Polymeren (vgl. G. Glöckner, "Polymercharakterisierung durch Flüssigkeitschromatographie", Heidelberg (1982)).

Bei der Standardmethode wird gemessen in 0,25 %iger Tetrahydrofuranlösung bei 23°C und einer Durchflußgeschwindigkeit von 1,2 ml/min. Die Molmasse wird zweckmäßig vor der Funktionalisierung ermittelt, da manche funktionalisierte Polymere von GPC-Säulen irreversibel adsorbiert werden und diese unbrauchbar machen.

Für das erfindungsgemäße Verfahren geeignete Polymere mit hohen Gehalten an lebenden bifunktionellen Li-Polymeren lassen sich besonders gut herstellen nach dem in der DE 40 30 400 beschriebenen 2-stufigen Polymerisationsverfahren.

### Beispiel 1

Es wurde ein Initiator verwendet, der durch Dimerisierung von 1 Mol 1-Phenyl 1-(3,4-Dimethylphenyl)-ethylen mit Lithiumgranulat in einer Mischung aus je 3 Mol Diethylether und Ethylbenzol bei unter 35°C gewonnen wurde.

Nach der Umsetzung wurde Ether und Ethylbenzol unterhalb von 30°C abdestilliert, bis der Ethergehalt auf <0,4 Mol je Mol Diphenylethylen abgesunken war und eine Initiator-Konzentration von 1 Mol/l erreicht wurde. Der Katalysator muß unmittelbar nach seiner Herstellung verbraucht werden, da er nach einigen Stunden auszukristallisieren beginnt.

Die Polymerisationsversuche wurden in einem zylindrischen, 6 l fassenden, ummantelten Reaktor mit einer Höhe von 40 und einem Durchmesser von 15 cm ausgeführt. Der Reaktor war mit einem mit 5 mm Wandabstand rotierenden Flügelrührer ausgerüstet, so daß keine ungerührten Zonen vorhanden waren. Die Flügel waren im Wandbereich mit 30° gegen die Waagrechte für Auftrieb und im Zentrum (60 % des Durchmessers) mit 290° für Abtrieb eingestellt. Als Antrieb diente ein Druckluftmotor mit hohem Drehmoment. Der Reaktormantel konnte bis -10°C gekühlt und 70°C beheizt werden. Auf dem Reaktor befanden sich kalibrierte Vorratsbehälter für die Dien (Butadien, Isopren) Styrol und Cyclohexan. Auf dem Vorratsbehälter für Dien befand sich ein mit Sole beschickter Kühler, über den nicht umgesetztes Butadien aus dem Reaktor in die Vorlage zurückdestilliert werden konnte.

Alle für die Herstellung der Telechele erforderlichen Operationen wurden unter strengen Ausschluß von Sauerstoff und Feuchtigkeit durchgeführt. Der Reaktor wurde vor der Inbetriebnahme mit einer Lösung von Li-Butyl/Diphenylethylen in Hexan ausgekocht. Lösungsmittel, Monomere und Ethylenoxid wurden durch Destillation über Aluminium-trisobutyl gereinigt, das Lösungsmittel außerdem im Vorratsbehälter mit der Katalysatorlösung austitriert, bis eine schwache Orangenfarbe bestehen blieb.

Zur Herstellung der Telechelen wurde der Reaktor auf -10°C gekühlt, mit 300 cm³ Butadien bzw. Isopren beschickt und 154 m³ der 1 molaren Katalysatorlösung zugegeben. Nach 40-90 Minuten in der Nähe des Siedepunktes der Monomeren ist die Farbe der Mischung von dunkelbraun auf ein durchsichtiges hellorange bis dunkelgelb zurückgegangen.

Die viskos gewordene Lösung wird nun unter gutem Rühren und Zugabe von Cyclohexan langsam auf 60°C gebracht, wobei bei der Verwendung von Butadien ein Teil des Monomeren in die Vorlage zurückdestilliert. Bei 60°C werden kontinuierlich nach Maßgabe des Verbrauches das restliche Monomer, insgesamt 700 g (= 1,12 l Butadien bzw. 1.03 l Isopren) und 4,25 l Cyclohexan zugegeben.

Zur Funktionalisierung wird in die Polymerlösung bei einer Temperatur von <40°C mit 67 g Benzalanilin (2,4 Mol je Mol Initiator) unter intensivem Rühren in ca. 2 sek. gemischt.

Die Viskosität steigt stark an, es entsteht jedoch kein Gel. Es wird 1 Std. gerührt und dann der Reaktorinhalt geteilt: Eine Hälfte des Reaktorinhaltes wird abgelassen und zur Aufarbeitung mit etwa 20 % absolutem Methanol, bezogen auf das Volumen der Lösung, intensiv gemischt. Nach dem Abstellen des Rührers und vollständiger Phasentrennung wird die untere Lösungsmittelschicht abgelassen. Nach 1-2maliger Wiederholung dieser Operation enthält die Polymer-Lösung unter 1 ppm Alkali. Destilliertes Wasser, mit dem die Lösung zur Sicherheit ausgeschüttelt wird, reagiert neutral. Nach Zugabe von 0,1 % eines handeslüblichen Stabilisators (Irganox 1076 der Fa. Ciba-Geigy) wird das Cyclohexan im Vakuum abdestilliert. Es entsteht eine klare, wenig gefärbte Masse.

### Umsetzung mit Ethylenoxid

### Methode 1:

200 g der Polymermasse werden in 670 cm³ THF gelöst, mit 14 cm³ Wasser versetzt, in einen 1 1 Autoklaven überführt und auf 0°C gekühlt. Nach Spülen mit Stickstoff und Zugabe von 150 cm³ einer 1 molaren Lösung von EO in THF (entsprechend 6,6 g bzw. ca. 4 Mol EO/Mol Polymer) wird der Autoklav verschlossen und 4 Stunden auf 120°C erhitzt.

Zur Aufarbeitung wird das Polymer mit 2 l Methanol gefällt, unter Rühren mit 1 l Methanol gewaschen und bei 100°C im Vakuum, zuletzt bei 1 mbar, von anhaftendem Methanol befreit.

### Methode 2:

Die noch im Polymerisationsreaktor befindliche restliche Lösung des mit Benzalanilin umgesetzten Polymeren wird auf etwa 10°C gekühlt und unter intensivem Rühren 13,6 g Ethylenoxid (ca. 4 Mol/ Mol Polymer) zugegeben. Nach 1 Std. wird, wie zuvor für die 1. Produkthälfte beschrieben, aufgearbeitet.

Der Stickstoffgehalt wurde nach Kjeldahl bestimmt.

Die OH-Zahl wurde mit einer an DIN 53 240 angelehnten modifizierten Vorschrift mit Phthalsäureanhydrid bestimmt, wobei nach der Umsetzung (vor der Titration) 30 cm³ n-Heptan zugesetzt wurde.

Da die Ermittlung der Funktionalität aus Molmasse und OH- oder Aminzahl nur einen statistischen Mittelwert liefert, wurden der Gehalt der Telechele an Oligomeren mit unterschiedlicher Funktionalität durch HPLC-Analytik bestimmt.

OH-terminierte Telechele wurden unter folgenden Bedingungen in nicht funktionalisierte, monofunktionelle und bifunktionelle Anteile getrennt:
- Säule: Li-Chrosorb CN (5 µm), Fa. Merck, Darmstadt
- Lösungsmittelpaar: A = Cyclohexan / B = Methylenchlorid
- Gradient: 100 % A → 58 % B + 42 % A; 30 Min.
- Durchflußrate: 1 ml/min.
- Detektor: Massendetektor der Fa. Zinsser Analytik, Frankfurt, Modell 750/14

Die mit Benzalanilin terminierten Telechele wurden an einer Lichrosorb-NR₂-Säule, 5 µm, 240 x 4 mm, Fa. Merck, Darmstadt, unter den gleichen Bedingungen getrennt.

Ausgewertet wurden die scharf getrennten Flächen der drei Komponenten, von denen zuerst der nicht funktionalisierte Anteil, dann der monofunktionelle Anteil und zuletzt das bifunktionelle Telechel registriert wurde.

### Beispiel 2

### Herstellung eines mit CH₃CHNAr terminierten Polyisoprens

Ein mit CH₃CHNAr terminiertes Polyisopren mit der Zielmolmasse 5778, davon 5000 = 86,5 % Dienanteil, wurde gemäß Vorschrift hergestellt.

Es wurde ein Stickstoffgehalt von 0,52 % gemessen, entsprechend einerm Äquivalentgewicht von 2693 (Theorie 2889).

Bei der HPLC passiert das Produkt die Lichrosorb CN-Säulen fast ohne Retention. Mit der für die Analyse von Aminen geeigneten Säule Lichrosorb-NR₂, (5 µm) wird ein einheitlicher Peak mit 9,9 Minuten Retentionszeit erhalten, der auf hohe Funktionalisierungsausbeute schließen läßt.

### Umsetzung mit Ethylenoxid in THF gemäß Vorschrift 1

Die HPLC-Analyse an einer Lichrosorb CN-Säule ergab nach einer Stunde einen Umsatz von 89 % (Retentionszeit des Zielproduktes ca. 9,5 Minuten). Der nicht umgesetzte Anteil erschien nach ca. 3,7 Minuten, der Elutionszeit des Ausgangsproduktes. Nach 4 Stunden war die Umsetzung vollständig (>>95 %) der Peak des Ausgangsproduktes verschwunden.

OH-Zahl (mg KOH/g): 20,5 entsprechend einem Äquivalentgewicht von 2732.

### Umsetzung mit Ethylenoxid gemäß Vorschrift 2

Uneinheitlicher verläuft die Umsetzung von Ethylenoxid (4 Mol/Mol Polymeres) mit dem Li-Amid-Zwischenprodukt der Terminierung mit Benzanilid. Das Reaktionsprodukt enthält mindestens 5 Komponenten, die wahrscheinlich z.T. Polyetherstruktur haben, mit Elutionszeiten zwischen 7 und 20 Minuten. F=2>95 %.

### OH-Zahl (mg KOHg): 20,2 Äquivalentgew.: 2772

### Beispiel 3

### Herstellung eines mit CH₃CHNAr terminierten Polybutadiens

Bei Zugabe des CH₃CHNAr wurde nur ein geringer Anstieg der Viskosität festgestellt. Das Polymer hatte eine GPC-Molmasse von 5646, eine Uneinheitlichkeit von 1,06 und einen Stickstoffgehalt von 0,48 % (Theorie 0,5 %).

Die HPLC (Lichrosorb-NH₂, 5 µ-Säule) ergab 4,9 % monofunktionelles und 95,1 % bifunktionelles Telechel (Elutions-Zeit 9,5 bzw. 10,5 Min). Bei HPLC mit einer Lichrosorb CN-Säule wurde das Produkt nicht getrennt (Retentionszeit 3,5 Minuten).

### Terminierung des Reaktionsproduktes mit EO gemäß Vorschrift 2

Es wurde entsprechend Vorschrift 2 terminiert, jedoch nur mit 2,4 Mol EO je Mol Initiator: Da das Gelieren erst 25 sec. nach Zugabe einsetzte, konnte homogen eingemischt werden.

Infolge der kleineren Menge Funktionalisierungsreagenz enthielt das HPLC-Elugramm (Lichrosorb CN-Säule) nur 3 scharf getrennte Peaks.

| | | | | |
|---|---|---|---|---|
| F | 0 | 1 | 2a | 2b |
| Fl % | - | 3,4 | 53,4 | 43,2 |
| Elut.-Zeit [Min] | - | 11 | 17 | 21 |

Der bifunktionelle Anteil war mit insgesamt 96,6 % sehr hoch.

OH-Zahl (mg KOH/g): 20,3 (Äquiv.-Gew.-2760).

## Patentansprüche

1. Durch anionische Polymerisation eines Diens mit bifunktionellem Li-Initiator und anschließende polymeranaloge Umsetzung erhältliches Polydien oder Copolydien, enthaltend mindestens eine Ethanolamin- bzw. Oligoether-ol-amin-Endgruppe der allgemeinen Struktur I 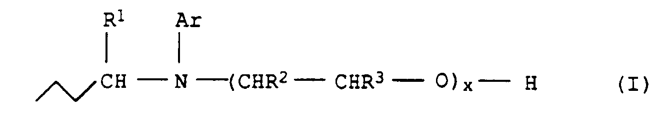 in der R¹: Alkyl oder Aryl; Ar: Aryl; R²: Alkyl oder Wasserstoff und R³: Aryl, Alkyl oder Wasserstoff bedeutet und x den Wert 1 bis 10 annehmen kann, sowie deren Hydrierungsprodukte.

2. Verfahren zur Herstellung von funktionalisierten Polydienen nach Anspruch 1, dadurch gekennzeichnet, daß lebendes, an mindestens einem Kettenende lithiumorganisch substituiertes Polydien zunächst mit einem entsprechenden Aldimin der allgemeinen Formel II
R¹-CH=N-Ar (II)
in der R¹ und Ar die obenbeschriebene Bedeutung haben, und dann, gegebenenfalls nach Hydrolyse und Isolierung eines Zwischenprodukts, mit einem entprechenden Epoxid der allgemeinen Formel III 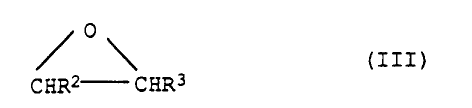 in der R² und R³ die Bedeutung wie in Anspruch 1 haben, umgesetzt wird.

3. Telechel nach Anspruch 1, auf der Grundlage von Butadien oder Isopren.

4. Verfahren nach Anspruch 2, dadurch gekennzeichnet, daß Polybutadien oder Polyisopren als Polydien eingesetzt wird.

5. Telechel nach Anspruch 1 mit einer Molmasse M_{w} zwischen 1.000 und 500.000.

6. Telechel nach Anspruch 1, enthaltend ferner Styrol.

## Claims

1. A polydiene or copolydiene obtainable by anionic polymerization of a diene by means of a bifunctional lithium initiator and subsequent polymer-analogous reaction and containing at least one ethanolamino or oligoetherolamino terminal group of the structure I 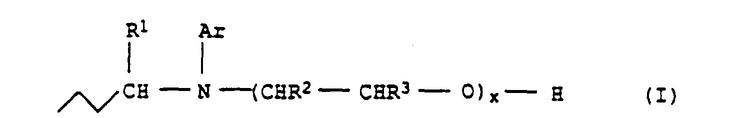 where R¹ is alkyl or aryl, Ar is aryl, R² is alkyl or hydrogen, R³ is aryl, alkyl or hydrogen, and x is from 1 to 10, or a hydrogenation product thereof.

2. A process for the preparation of a functionalized polydiene as claimed in claim 1, which comprises reacting a living polydiene which has an organolithium substituent on at least one chain end first with an appropriate aldimine of the formula II
R¹-CH=N-Ar (II)
where R¹ and Ar are as defined above, and then, if necessary after hydrolysis and isolation of an intermediate, with an appropriate epoxide of the formula III 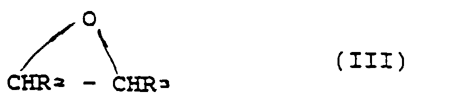 where R² and R³ are as defined in claim 1.

3. A telechel as claimed in claim 1, based on butadiene or isoprene.

4. A process as claimed in claim 2, wherein the polydiene employed is polybutadiene or polyisoprene.

5. A telechel as claimed in claim 1 having a molecular weight M_{w} of from 1000 to 500,000.

6. A telechel as claimed in claim 1, also containing styrene.

## Revendications

1. Polydiène ou copolydiène obtenu par polymérisation anionique d'un diène avec un initiateur de Li bifonctionnel et par mise en réaction ultérieure analogue aux réactions sur des polymères, contenant au moins un groupe terminal d'éthanolamine, respectivement d'oligoéther-ol-amine répondant à la structure générale I 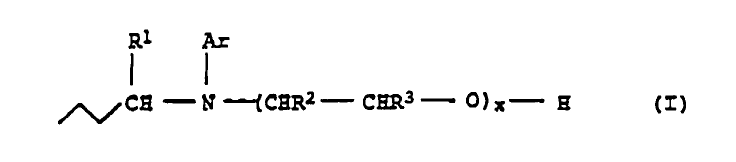 dans laquelle R¹ représente un groupe alkyle ou un groupe aryle; Ar représente un groupe aryle; R² représente un groupe alkyle ou un atome d'hydrogène et R³ représente un groupe aryle, un groupe alkyle ou un atome d'hydrogène; et x peut prendre la valeur de 1 à 10, ainsi que leurs produits d'hydrogénation.

2. Procédé pour la préparation de polydiénes fonctionnalisés selon la revendication 1, caractérisé en ce qu'on fait réagir du polydiène vivant substitué par un groupe d'organolithium sur au moins une extrémité de la chaîne, d'abord avec une aldimine correspondante répondant à la formule générale II
R¹-CH=N-Ar (II)
dans laquelle R¹ et Ar ont la signification décrite ci-dessus, et ensuite, le cas échéant, après hydrolyse et isolation d'un produit intermédiaire, avec un époxyde correspondant répondant à la formule générale III 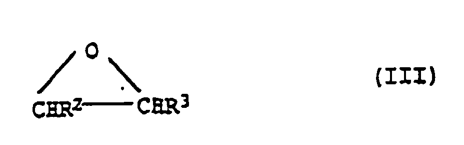 dans laquelle R² et R³ ont la signification indiquée à la revendication 1.

3. Téléchèle selon la revendication 1, à base de butadiène ou d'isoprène.

4. Procédé selon la revendication 2, caractérisé en ce qu'on met en oeuvre du polybutadiène ou du polyisoprène comme polydiène.

5. Téléchèle selon la revendication 1. possédant une masse molaire M_{w} entre 1.000 et 500.000.

6. Téléchèle selon la revendication 1, contenant en outre du styrène.
